# EUROPEAN PATENT SPECIFICATION

(11) **EP 0 274 509 B1**
(45) Date of publication and mention of the grant of the patent: **23.06.1993**
(21) Application number: 87904708.2
(22) Date of filing: 20.07.1987
(51) Int. Cl.: H03M 1/22, G01B 3/10, G01B 3/12

(54) **LINEAR MEASURING DEVICES**
LINEARE MESSGERÄTE
DISPOSITIF DE MESURAGE LINEAIRE

(30) Priority: 19.07.1986 GB 8617700; 15.11.1986 GB 8627359
(43) Date of publication of application: 20.07.1988
(73) Proprietor: CARE, Ronald James, Beaufort, Ebbw Vale, Gwent (GB)
(72) Inventor: CARE, Ronald James, Beaufort, Ebbw Vale, Gwent (GB)
(74) Representative: Lainé, Simon James
(86) International application number: PCT/GB87/00511
(87) International publication number: WO 88/00776

(56) References cited:
- DE-A- 2 346 636
- DE-A- 2 938 136
- FR-A- 2 544 485
- GB-A- 2 023 290
- US-A- 2 706 336
- US-A- 3 780 440
- US-A- 4 009 339
- US-A- 4 195 348
- Patent Abstract of Japan, vol.8, no.278 (P-322)(1715) 19 December 1984 & JP-A-59145901

## Description

This invention relates to linear measuring devices as used for example for measuring dimensions of rooms, buildings, or other objects, or for measuring the distance travelled along a surface. The term 'linear' is intended also to include measurement of distances along non-straight paths over non-flat surfaces.

So-called "tape measures" are well known, consisting of a length of tape along which are marked the units of measurement, (e.g. centimetres or inches), the tape being wound on a rotary reel provided with rewind facilities. Such tape measures have certain limitations, for example only a limited length of tape can be stored on a reel, the tape cannot easily be read in the dark, or by the blind, and it may become dirty or be damaged.

Wheel measuring devices have also been proposed in which the wheel is run along the surface to be measured and the motion of the wheel operates a counter or display which represents units of measurements. These wheel measuring devices are only applicable to certain specific uses and are subject to certain operating difficulties.

GB-A-2023290 describes a measuring instrument having an extendable tape, movements of which are detected by an optical element which produces pulses that are fed to a counter and a display. It has only one measuring system which relies on markings applied to the tape itself. This has limitations.

For example the tape may pick up dirt which affects the reading of the sensor, unless the tape is regularly cleaned, or corrections made to compensate. Furthermore the method used for applying the tape to the surface to be measured may have serious effects on the final reading. For example if there are obstacles or obstructions the tape might be stretched taut over the obstacle, or around it, or a series of smaller measurements might be made. These will probably introduce unknown human errors, or errors due to catenary, tension and stretch in the line or tape. In particular, if the tape expands or contracts due to thermal changes the pulse count will remain constant, and the final reading will include an error.

The use of a rotor wheel for measurement has been proposed for example in US-A-4009339. That device also had a counting probe to produce a pulse each time it is pressed. These pulses and the output from the rotor wheel are both fed to a common input/output station, but the probe and the rotor wheel perform entirely different functions and moreover they are operated on a mutually exclusive basis, that is if one is being used, the other is not.

In JP-A-59 145 901 the instrument includes two measuring systems, one having an extendable tape, and the other a telescoping antenna operated by a wire. These two systems also have two different "numerical value receiving parts" and thus errors may arise in comparing one reading with another, if that is possible at all - it is not suggested. The antenna and the tape are both linear, and are aligned in the same straight line, but in opposite directions. The antenna is very short, and cannot be used to cross check the tape reading without manipulations which would introduce more errors. By contrast, an external exposed measuring wheel has in effect an infinite range, and can be matched with the full length of the measuring tape/line.

It is the aim of this invention to combine the advantages of an external rotor wheel with those of a tape or line, and to direct both sets of pulses to the same calculator/counter/display. This reduces weight, bulk, and cost, and, importantly, it also cuts out errors or differences which may arise due to malfunction or mis-operation of the counter/calculator display. It will allow for frequent cross-checks to ensure that both systems are "in sympathy", and also give an approximation for the value or any errors which may exist. There will also be the ability to use whichever system is most effective for the circumstances (e.g. across a gap, one would use a line or tape, and over an obstacle or around an internal surface of a cylinder one might use the external wheel).

According to the present invention there is provided a linear measuring device for measuring linear distances on a base surface, comprising a holder, a flexible, elongate measuring element extendable from the holder, a reel for holding multiple turns of said element, means for rotating the reel to recoil the element thereon, a rotary member in firm frictional engagement with said element, to be rotated thereby as said element is reeled in and out, and having an array of angularly spaced indicia, first detector means co-operating with said indicia to produce pulses as said member rotates, and counter/calculator means to produce from the pulses an output corresponding to the length of element unwound from said reel, characterised by a second measuring system also mounted on the holder for measuring linear distances on a base surface and including second detector means co-operating with a movable measuring element in the form of a rotor with part of its periphery exposed, to generate pulses in response to movement thereof, and means for transmitting the second pulses from the second detector means to the same counter/calculator means, to produce a second output representing the linear measurement derived by the second measuring system.

Preferably, there will be means for selectively connecting said counter/calculator means with the first detector means or the second detector means. Conveniently, there will be memory means for retaining sensed measurements in the device. This may comprise an electronic memory activated by a switch device, and that can be arranged to prevent further pulses reaching the counter and to hold the last ouput reading on the counter display.

One or both detector means may include a direction sensing means arranged to transmit a signal to the counter/calculator means, to add or subtract accordingly from the measured total. Other useful optional features comprise an auxiliary input connection to the same counter/calculator means for connection to an external remote signal generator, a mode selector switch means for selectively actuating the different measuring systems, and a connection from the counter/calculator to an external unit such as a printer.

The first measuring element will preferably be a circular section line.

The invention may be performed in various ways and several preferred embodiments will now be described, by way of example, with reference to the accompanying drawings, in which:-
Figure 1 is a diagram illustrating the main mechanical and electrical components of one embodiment of the invention,
Figure 2 is an external view of this same example.
Figure 2A is an end view on an enlarged scale illustrating the clip at the end of the measuring line,
Figure 3 is a block circuit diagram illustrating the main electrical components of another embodiment,
Figure 4 is a sectional elevation through another embodiment of the invention illustrating the main mechanical components,
Figure 5 is an external view of another embodiment illustrating an auxiliary measuring wheel,
Figure 6 is a perspective view illustrating a modified clip at the end of the measuring line, and
Figure 7 is a block circuit diagram illustrating the main electrical and mechanical components in another example of the invention.

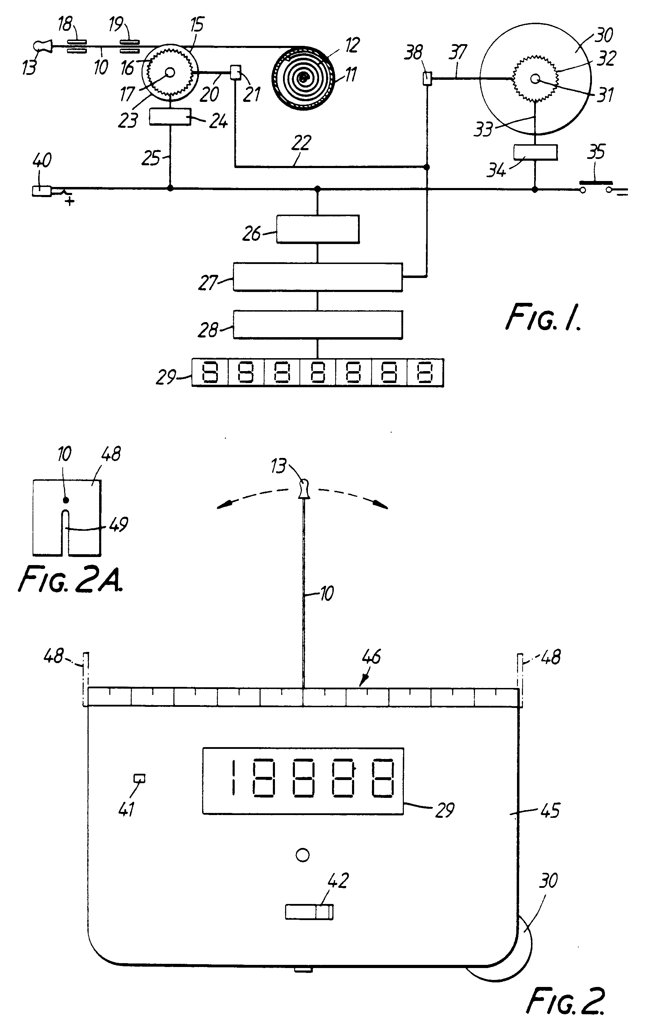

Referring first to Figure 1 the measuring apparatus in this example comprises a flexible line 10 wound on a drum 11 provided with an automatic rewind spring 12 and having a clip or other fitting 13 at its free end. The line may be formed of any suitable flexible non-extensible, rotproof,material such as nylon,steel,or synthetic plastics. The line in this example is preferably a circular section monofilament and it is wound around a friction pulley or capstan 15 having a shallow external groove with which the line makes a good frictional grip. This Capstan is formed with a number of closely spaced teeth or notches 16 at intervals corresponding to the smallest unit of measurement required for the measuring line. For example, if the smallest required unit of measurement is O.5 m.m. the teeth will be spaced at the appropriate angle measured from the rotary axis 17 to give a circumferential measurement of O.5 m.m. at the periphery of the groove between adjacent tooth positions.

The apparatus also includes a first detector comprising a feeler 23 positioned to engage the teeth 16 as the Capstan rotates and to influence a sensor 24 which may, for example, be a piezo electric crystal or a microswitch, the output from the sensor being fed on line 25 to the digital counter circuit to be described. The apparatus also includes a further directional sensor comprising another finger 20 also arranged to engage the notches 16 and connected to a sensor 21 which may take a variety of forms but produces an output signal on line 22 which provides an indication of either forward or reverse movement of the Capstan 15. This directional sensor may, for example, be an electronic filter circuit coupled with a piezo electric crystal designed to detect the shape of the pulses generated by the crystal in response to movements of the feeler 20. Alternatively the two sensor 21,24 may be coupled with circuitry designed to produce a directional signal in response to the phase difference or phase change between the two feelers.

The electronic digital counter includes a "de-bouncing unit" 26,including filter circuitry to eliminate unwanted or unintensional pulses, a binary coded decimal counter 27, and a binary coded decimal de-coder 28 linked with a seven segment LCD display 29 arranged to display the measured increments in decimal form,in this case in metres, centimetres and millimetres.

When the line is rewound on to the drum 11 by the spring 12 the sensor 21 detects the reverse rotation of the capstan wheel 15 and provides a pulse on line 22 to the counter 27 to indicate that the pulses are to be subtracted thereby providing a countdown towards zero. At any instant the resultant measurement from the counter 27 may be held on the display 29 or in an electronic memory by pressing a button 35, which prevents further pulses reaching the counter 27 and holds the last reading on the display 29. When switched off the device is automatically reset to zero.

The apparatus also includes a direct wheel measuring facility comprising an exposed rotor wheel 30 mounted to rotate on an axis 31 and having a rotary pulse generator including a toothed rotor 32 engaged by a feeler 33 attached to a piezo electric or other electric pulse generator 34. The output from this pulse generator is fed to the de-bounching unit 26 and to the other components of the counter already described. In addition there is a further feeler 37 connected to a sensor 38 providing an electric signal signifying forward or reverse movement of the wheel 30. This component of the instrument operates in somewhat the same manner as the flexible line measuring device, but the measuring pulses are generated by running the wheel 30 along a surface whose measurements are required.

In addition this instrument includes an auxiliary input 40 in the form of an electrical socket intended to co-operate with an auxiliary jack attached to an external pulse generator such as a pedometer, or manual or foot operated switch. These pulses will be added and displayed in the unit 29 as previously described.

In the instrument illustrated in Figure 2 and Figure 2A the case 45 has a centimetre scale 46 along one edge with the flexible measuring line 10 issuing through a hole at the centre, the line having a flat clip or plate 48 at its free end with a slot 49 which allows the clip to be temporarily held at the end of the scale when required, or alternatively to allow the line to be temporarily anchored round any suitable fixed object such as a hook or pole. In this example the external direct measurement wheel 30 is located at one corner of the case, the LCD display unit 29 is located centrally, the auxiliary input 40 on the opposite edge of the case and, in addition, there is a switch or button 41 controlling a metric to imperial conversion circuit, and a mode selector switch 42.

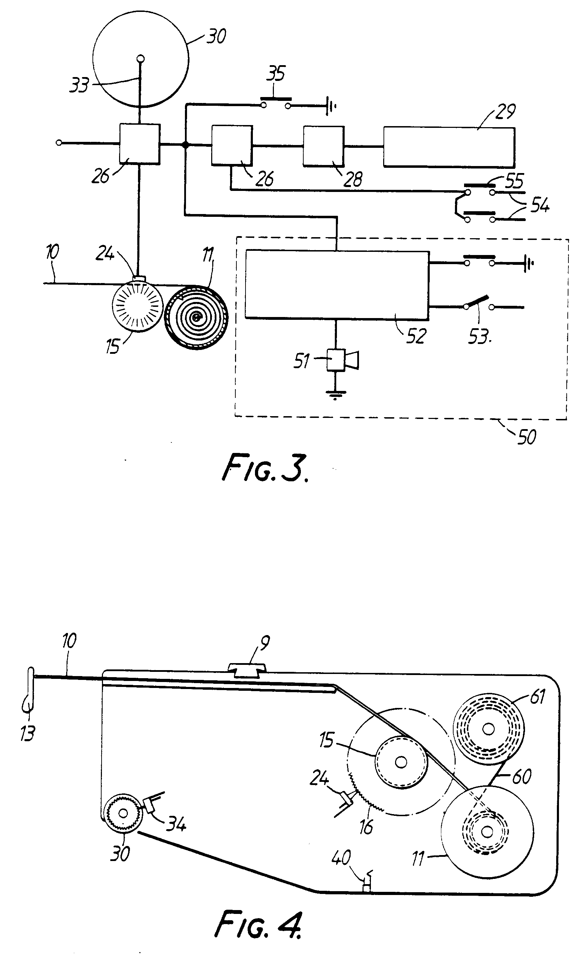

In the alternative embodiment illustrated in Figure 3 like parts are indicated by the same reference numerals. This unit includes an additional audible unit indicated generally at 50, which includes a loudspeaker 51 connected to a tone generator 52 combined with counter and register store. In addition there is an audio on/off switch 53 and an external audio line 54 operated by switch 55.

In the example illustrated in Figure 4 again the main components are indicated by the same reference numerals as in Figure 1 and in this case the rewind drum 11 is connected to a "Tensator" (RTM) spring 60 whose opposite ends are wound around the rewind drum 11 and the spring housing drum 61. This provides a substantially constant rewind force over the whole length of the measuring line. The other components in this illustrated example are similar to those of Figure 1.

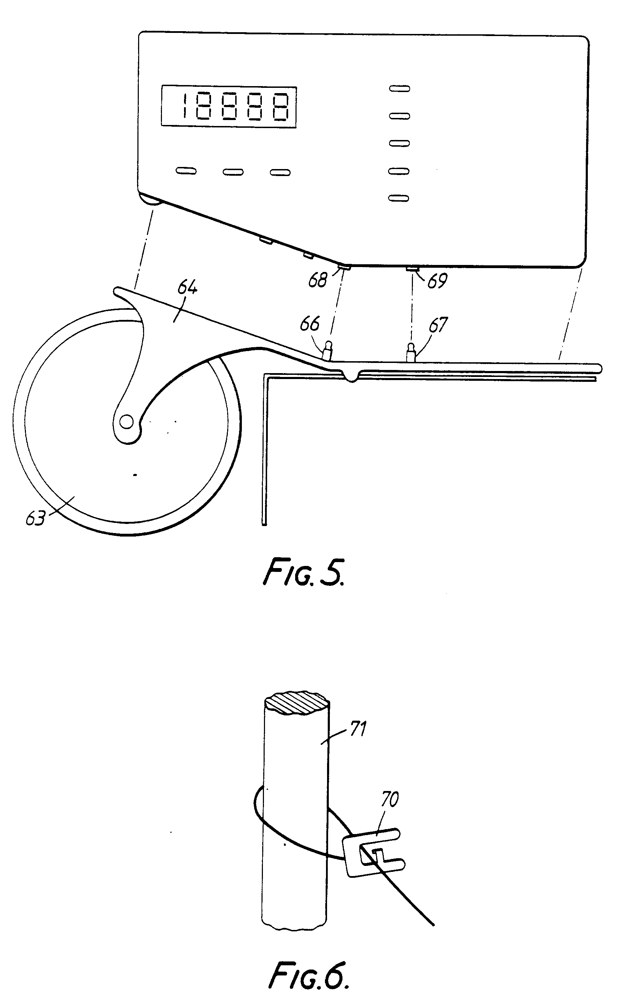

In the further example illustrated in Figure 5 the direct measuring wheel 30 of the Figure 1 example is replaced by a detachable measuring wheel 63 of larger diameter mounted on a fitting or bracket 64, which is designed to clip on to the body or housing 65 of the instrument and is provided with electrical contacts 66,67 to engage corresponding contacts 68,69 on the body of the housing so that the impulses generated by the wheel are fed to the counter and display unit in the same manner as previously described.

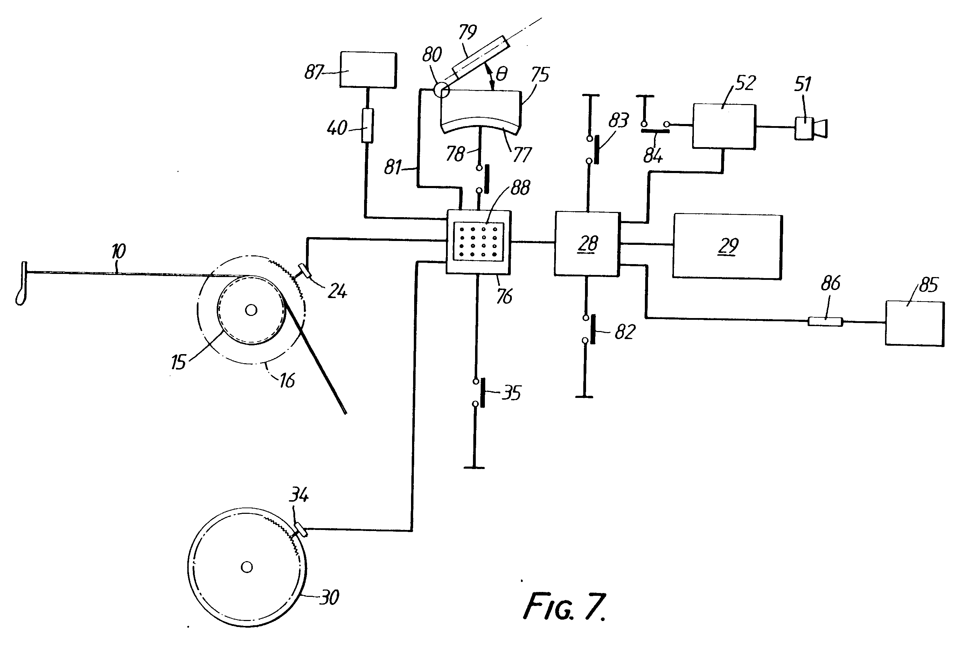

Figure 6 illustrates a modified form of clip 70 at the end of the measuring line 10 intended to facilitate fastening of the line around a fixed pole or hook 71.

A further example illustrated in Figure 7 contains components similar to those of the Figure 1 example and indicated by the same reference numerals. In addition, this example includes a sextant and bubble level unit 75 linked to the first calculator unit 76. The mercury "bubble gauge"77 has an output 78 providing an indication when the instrument is held level. The sight tube 79 is coupled to an angle meter 80 providing a pulsed output on line 81 which is a measure of tan ϑ where ϑ is the angle of elevation of the sight tube. When combined with the measurement signal D generated by the pulse generator 21 from the measuring line 10, the calculator 76 provides an output equivalent to D tan ϑ , i.e. the height of the object being observed.

In the Figure 7 example 87 is an external pulse generator such as a foot switch, connected via jack 40 to the calculator, 82 is the metric/imperial conversion switch, 83 is the zero or reset datum switch, 84 is a manual on-off switch for the tone generator/synthesiser 52, and 85 is an external printer connected to the counter circuit through the jack 86. The calculator 76 includes a decimal keyboard 88 by which programmed mathematical functions or further numerals may be introduced.

It will be appreciated that the line or tape 10 may in use accummulate dirt or in other ways suffer an increase or change in thickness, and this may affect the accuracy of the measurements made by the rotary capstan 15 and sensor device 16,24. To eliminate or compensate for this the device preferably includes a cleaning element 18 in the form of a felt or fibre wiper and an electrical thickness sensor or gauge 19 which continually senses the dimensions of the element 10, and applies a corresponding correction as a negative percentage factor to the counter 27, the correction being proportional to the sensed change in dimensions. Alternatively or in addition-the gauge 19 may be connected to an electrical warning device, such as a flashing light or audible alarm, to indicate that the element 10 needs to be cleaned, and that the measurements are suspect.

In the embodiment of Figure 3 the audible unit 50 with the loudspeaker 51 may take various different forms. For example, the tone generator may be linked to the counter circuit to produce a series of tones or "bleeps" equivalent in number to the digits which would be displayed visibly, for the assistance of the blind, or in the dark for example. Alternatively or in addition to the tone generator there may be a speech synthesiser also linked to the counter/calculator unit and arranged to generate speech sounds representing the digits in the display unit. The calculator preferably includes an electronic memory which may, for example, be of the magnetic or diode type and the calculator preferably includes at least the basic mathematical functions of a portable hand-held instrument, i.e. ,+,-,x and ÷. Thus, for example, it is possible to take a first measurement a which will be held in the memory to be followed by a second linear measurement b also held in the memory, so that the operator can selectively either add a + b,or multiply a x b to produce an area. Likewise, the volume of a room or tank having sides a,b,c, can be obtained by three successive measurements a,b,c, combined by a double multiplying function. Likewise, simple mathematical calculations can be performed with simple inbuilt or programable functions; for example, the radius of a cylinder R can be obtained from a measurement Q of its circumference using the programmed function $\text{R= Q/2π}$
Conveniently the calculator unit is coupled to the counter so that the measured values can be entered directly in the calculator. Alternatively, however, the calculator may be a separate unit in the same holder having manual binary decimal input keys. The operator then enters the measured values into the calculator as in a normal independent calculator unit.
The sextant-bubble-level unit 75 may have a fixed sextant angle ϑ if preferred, in which case the calculator may have a pre-programed tan ϑ value to obtain the height h of the observed object directly from the formula ${\text{h}}_{̲} \text{=} {\text{d}}_{̲} \text{tan ϑ}$ , where d is the measured distance from the object.

The output from the counter may, if required, be connected to an internal or external printer to provide a permanent record of the measured or calculated values. The instrument may also include mechanical and/or or electronic "hold" or locking devices to retain the instantaneous position of the capstan or measuring wheel or to maintain the sensed measurement in the electronic memory. The direct measuring wheel may, if required, be provided with an adjustable zero/datum index to facilitate direct measurements and to afford an adjustable set zero. The control buttons on the casing of the instrument may be recessed and they may be combined with an electronic bleeper circuit to provide an audible indication when any button is actuated.

It will be appreciated that in these preferred examples of the invention it is unnecessary to provide any measuring points or indicia on the flexible measuring line since movements of the line are transferred to the rotary capstan which carries the measuring points. This greatly increases the life of the instrument and eliminates risk of malfunction from loss of indicia.

## Claims

1. A linear measuring device for measuring linear distances on a base surface, comprising a holder (45), a flexible, elongate measuring element (10) extendable from the holder (45), a reel (11) for holding multiple turns of said element (10), means (12,60) for rotating the reel (11) to recoil the element (10) thereon, a rotary member (15) in firm frictional engagement with said element (10), to be rotated thereby as said element (10) is reeled in and out, and having an array of angularly spaced indicia (16), first detector means (21,24) co-operating with said indicia (16) to produce pulses as said member rotates, and counter/calculator means (27,76) to produce from the pulses an output corresponding to the length of element (10) unwound from said reel, characterised by a second measuring system also mounted on the holder (45) for measuring linear distances on a base surface and including second detector means (34) co-operating with a movable measuring element (30) in the form of a rotor with part of its periphery exposed, to generate pulses in response to movement thereof, and means for transmitting the second pulses from the second detector means (34) to the same counter/calculator means (27,76), to produce a second output representing the linear measurement derived by the second measuring system.

2. A measuring device according to Claim 1, characterised by means for selectively connecting said counter/calculator means (76) with the first detector means (21,24) or the second detector means (34).

3. A measuring device according to Claim 1 or Claim 2, characterised by memory means for retaining sensed measurements in the device.

4. A measuring device according to Claim 3, characterised in that the memory means comprises an electronic memory activated by a switch device (35).

5. A measuring device according to Claim 3 characterised in that the memory means includes a switch device (35) arranged to prevent further pulses reaching the counter (27) and to hold the last output reading on the counter display (29).

6. A measuring device according to any of the preceding Claims, characterised in that one or both detector means includes a direction sensing means arranged to transmit a signal to the counter/calculator means, to add or subtract accordingly from the measured total.

7. A measuring device according to any of the preceding Claims, characterised by an auxiliary input connection (40) to the same counter/calculator means (27,76) for connection to an external remote signal generator.

8. A measuring device according to any of the preceding Claims, characterised in that the first measuring element (10) is a circular section line.

9. A measuring device according to any of the preceding Claims, characterised by a mode selector switch means (42) for selectively actuating the different measuring systems.

10. A measuring device according to any of the preceding Claims, characterised by a connection (86) from the counter/calculator to an external unit such as a printer (85).

## Patentansprüche

1. Linearmessgerät zum Messen von linearen Anständen auf einer Grundfläche, bestehend aus einer Aufnahme (45), einem von der Aufnahme (45) auziehbaren biegsamen Messelement (10), einer Spule (11) zum Aufnehmen mehrerer Windungen des Elements (10), Mittel (12, 60) zum Drehen der Spule (11) zwecks Wiederaufspulen des Elements (10), ein drehbares Glied (15) in festem Reibungskontakt mit dem Element (10), so dass das Glied (15) beim Ab- bzw. Aufwickeln des Elements (10) mitgedreht wird, sowie einem winklig angeordneten Freistempel (16), ein erstes Erfassungsmittel (21, 24), welches mit dem Freistempel (16) zusammenarbeitet um Impulse der Bewegung des Gliedes (15) entsprechend zu erzeugen und Zähler/Rechner (27, 76) um aus den Impulse einen Ausstoss der Länge des herausgezogenden Messelements (10) entsprechend zu erzeugen, gekennzeichnet durch ein zweites Messelement, auch auf der Aufnahme (45) montiert, zwecks Messen von Linearabstände auf einer Grundfläche, und mit einem zweiten Erfassungsmittel (34), welches mit einem beweglichen Messelement (30), in der Form eines Rotors zusammenarbeitet, und seiner Bewegung entsprechend Impulse erzeugt, und Mittel zwecks Weiterleitung dieser zweiten Impulse von dem zweiten Erfassungsmittel (34) zum selben Zähler/Rechner (27, 76) um eine zweiten Anzeige der Linearmessung des zeiten Messystems entsprechend zu erzeugen.

2. Messgerät gemäss Anspruch 1, gekennzeichnet durch Mittel zur selektiven Verbindung des Zählers/Rechners (76) mit dem ersten Erfassungsmittel (21, 24) bzw. dem zweiten Erfassungsmittel (34).

3. Messgerät gemass Anspruch 1 oder Anspruch 2, gekennzeichnet durch Speichermittel zum Speichern der in dem Gerät erfassten Messwerte.

4. Messgerät gemäss Anspruch 3, dadurch gekennzeichnet, dass der Speicher ein elektronischer Speicher ist, der mittels Schalter (35) aktiviert wird.

5. Messgerät gemäss Anspruch 3, dadurch gekennzeichnet, dass der Speicher einen Schalter (35) beinhaltet um zu vermeiden, dass weitere Impulse an dem Zähler (27) gelangen, und der letzte Ausgabewert in der Anzeige (29) verbleibt.

6. Messgerät gemäss einem der vorstehenden Ansprüche, dadurch gekennzeichnet, dass einer oder beide Erfassungsmittel eine Richtungserfassungsmittel beinhaltet um Signale an dem Zähler/Rechner weiterzuleiten und dementsprechend von der gemessenen Summe zu addieren bzw. subtrahieren.

7. Messgerät gemäss einem der vorstehenden Ansprüche gekennzeichnet durch einen zusätzlichen Eingang (40) am selben Zähler/Rechner (27/76) zum Anschluss einer externen Signalgeber.

8. Messgerät gemäss einem der vorstehenden Ansprüche, dadurch gekennzeichnet, dass das erste Messelement (10) eine Kreisform hat.

9. Messgerät gemäss einem der vorstehenden Ansprüche, gekennzeichnet durch einem Modusschalter (42) zum Auswählen der verschiedenen Messysteme.

10. Messgerät gemäss einem der vorstehenden Ansprüche, gekennzeichnet durch einer Verbindung (86) von dem Zähler/Rechner an eine Zentraleinheit, z.B. einem Drucker (85).

## Revendications

1. Un appareil de mesure linéaire pour mesurer les distances linéaires sur une surface de base, se composant d'un support (45), d'un élément (10) de mesure souple et allongé qui peut être étendu au support (45), d'une bobine (11) qui peut contenir plusieurs enroulements de l'élément en question (10), de moyens (12, 60) pour faire tourner la bobine (11) afin de rebobiner l'élément (10), d'une barre rotative (15) en prise de friction ferme avec ledit élément (10), destinée à tourner alors que ledit élément (10) est embobiné et débobiné et ayant une rangée d'indices (16) espacés angulairement, les premiers moyens de détection (21, 24) agissant avec lesdits indices (16) pour produire des impulsions au fur et à mesure que ladite barre tourne, et un moyen de comptage/calcul (27, 76) pour produire à partir des impulsions un résultat correspondant à la longueur de l'élément (10) débobiné de la bobine, caractérisé par un deuxième système de mesure, également monté sur le support (45) et destiné à mesurer les distances linéaires sur une surface de base et comprenant un deuxième moyen de détection (34) agissant avec un élément mobile de mesure (30) sous forme d'un rotor ayant une partie de sa circonférence exposée pour produire des impulsions en réponse à son mouvement, et un moyen pour transmettre au même moyen de comptage/calcul (27, 76) les deuxièmes impulsions à partir du deuxième moyen de détection (34), afin de produire un deuxième résultat représentant la mesure linéaire découlant du deuxième système de mesure.

2. Un appareil de mesure selon la Revendication 1, caractérisé par le moyen de connexion sélective dudit moyen de comptage/calcul (76) avec le premier moyen de détection (21, 24) ou le second moyen de détection (34).

3. Un appareil de mesure selon la Revendication 1 ou la Revendication 2, caractérisé par un moyen de mémoire qui retient dans l'appareil les mesures détectées.

4. Un appareil de mesure selon la Revendication 3, caractérisé par le fait que le moyen de mémoire comprend une mémoire électronique actionnée par un interrupteur (35).

5. Un appareil de mesure selon la Revendication 3 caractérisé par le fait que le moyen de mémoire comporte un interrupteur (35) conçu de manière à empêcher que d'autres impulsions n'atteignent le compteur (27) et à retenir la dernière lecture du résultat sur l'affichage (29) du compteur.

6. Un appareil de mesure selon n'importe laquelle des Revendications précédentes, caractérisé par le fait que l'un des moyens de détection, ou les deux, comprend [comprennent] un moyen de détection de la direction destiné à transmettre un signal au moyen du comptage/calcul, pour ajouter ou soustraire selon le total mesuré.

7. Un appareil de mesure selon n'importe laquelle des Revendications précédentes, caractérisé par une connexion auxiliaire d'entrée (40) avec le moyen de comptage/calcul en question (27, 70) afin d'établir une liaison avec un émetteur de signaux extérieur et à distance.

8. Un appareil de mesure selon n'importe laquelle des Revendications précédentes, caractérisé par le fait que le premier élément de mesure (10) est une ligne de séparation circulaire.

9. Un appareil de mesure selon n'importe laquelle dos Revendications précédentes, caractérisé par un interrupteur de sélection de mode (41) destiné à mettre en oeuvre les différents systèmes de mesure d'une manière sélective.

10. Un appareil de mesure selon n'importe laquelle des Revendications précédentes, caractérisé par une liaison (86) d'un compteur/ calculatrice à une unité extérieure comme, par exemple, une imprimante (85).
